# EUROPEAN PATENT SPECIFICATION

(11) **EP 2 736 945 B1**
(45) Date of publication and mention of the grant of the patent: **09.09.2015**
(21) Application number: 12738138.2
(22) Date of filing: 24.07.2012
(51) Int. Cl.: C08G 65/00, C08G 65/26

(54) **PROCESS FOR THE CONTINUOUS PRODUCTION OF POLYETHEROLS**
VERFAHREN ZUR KONTINUIERLICHEN PRODUKTION VON POLYETHEROLEN
PROCÉDÉ DE PRODUCTION CONTINUE DE POLYÉTHEROLS

(30) Priority: 26.07.2011 EP 11175317
(43) Date of publication of application: 04.06.2014
(73) Proprietor: BASF SE, 67056 Ludwigshafen (DE)
(72) Inventor: CHILEKAR, Vinit, B-3080 Tervuren (BE); WISS, Kerstin, 68165 Mannheim (DE); LÖFFLER, Achim, 67346 Speyer (DE); DEGLMANN, Peter, 68163 Mannheim (DE); ZARBAKHSH, Sirus, 67063 Ludwigshafen (DE); BUSS, Christian, 01099 Dresden (DE)
(86) International application number: PCT/EP2012/064497
(87) International publication number: WO 2013/014153

(56) References cited:
- EP-A2- 0 124 071
- EP-A2- 0 318 784
- EP-A2- 2 177 555
- WO-A1-99/47581
- WO-A1-2009/077517

## Description

The present invention relates to a process for the continuous production of polyether alcohols.

Polyetherols, also called polyether polyols, polyether alcohols or, more general, polyols, are manufactured in large quantities and are widely used, for example for manufacturing polyurethanes (PU). For specific PU applications, specific polyetherols are needed. For example, for the manufacture of rigid foam PU polyols with a high functionality are required, whereas polyols with a low functionality may be used for the manufacture of soft PU foams.

In the context of the present invention, "rigid foam PU" in particular refers to foams manufactured from polyols with a functionality of 3.5 to 8 and an OH number of 150 to 800, and "soft PU foams" in particular refers to foams manufactured from polyols with a functionality of 2 to 4 and an OH number of 30 to 150.

One kind of polyetherols are sugar-glycerine- and/or vicinal toluene-diamine (vicTDA)- and/or sorbitol initiated polyetherols. "Vicinal TDA" refers to the 2,3- and 3,4-isomers of TDA, meaning that the amine substituents are located at neighbouring carbon atoms.

These sugar-glycerine- and/or vicinal toluene-diamine and or sorbitol initiated polyetherols are mostly used in polyurethane foam applications, mainly in rigid foam applications.

Conventionally used alkoxylation catalysts, like KOH, have some disadvantages. For example, KOH-catalyzed processes usually require a tedious work-up after the reaction (by neutralization and filtration).

The production of polyols by catalyzed alkoxylation of a starter compound is conventionally done in a batch or semi-batch process. For example, WO 2009/ 056513 A1 (Shell) describes alkoxylation reactions in a semi-batch process.

However, batch and semi-batch processes also have some disadvantages. For example, in semi-batch processes the production equipment, e. g. reactors, frequently has to be cleaned after each batch, leading to more downtime in the production plant and lower space time yield.

In order to overcome the mentioned problems, a continuous process using amine catalysts has been developed and is disclosed for example in WO 2009/ 077517 A1. In a continuous process, the reactors usually have to be cleaned less frequently, and amine catalysts usually may remain in the reaction product, thus making tedious work-up procedures after the reaction unnecessary.

However, the currently used continuous process for the alkoxylation of certain starter compounds also has some disadvantages.

For example, in WO2009/077517 A1, a continuous process for the production of polyether alcohols was described, based on amine catalysis, mainly N,N-dimethylethanolamine (DMEOA) catalyst in the temperature range from 50-180 °C. It was however found that the DMEOA catalyzed process above 115 °C gives low catalytic activity. On the other hand, high temperatures are useful for better heat removal and low viscosities for efficient mixing and improved solubilities of solid starters.

WO2009/077517 A1 also describes products with a molecular weight range from 200-2000 g/ mol. However, products with a molecular weight > 600 g/mol can only be obtained with very high residence times if DMEOA / TEA (triethylamine)/ TMA (trimethylamine)/ DMCHA (dimethyl-cyclohexylamine) are used.

Furthermore, the DMEOA / TEA / TMA / DMCHA catalyzed process requires about 0.5 wt% catalyst in order to reach the desired OH number. A low catalyst concentration of amine catalyst is highly desirable because the amine catalyst can influence the reactivity of the polyol in the following PU reaction. This leads to problems in slow PU systems. In order to avoid this problem, the amine catalyst needs to be separated leading to additional process steps.

Besides, there are also some other problems in the described process, for example abrasion in the sugar dosing unit, blockage in the sugar dosing unit and the higher residual / unreacted sugar in the product.

Thus, the objective of the present invention was to develop a continuous process which allows alkoxylation at higher reaction temperatures and gives access to products with higher molecular weights with short residence times using low catalyst loadings in order to minimize the effect of the catalyst on the polyol reactivity. Besides, it should be possible to use all sorts of starter compounds in the continuous process, including starter compounds solid at room temperature.

The problems mentioned above could surprisingly be solved by a continuous process according to claim 1 for the production of polyether alcohols using imidazole and/or derivatives of imidazole as catalysts at higher temperatures.

Thus, the object of the present invention is a process for the continuous production of polyether alcohols by catalyzed addition of at least one alkylene oxide to at least one hydrogen-functional starter compound, wherein the temperature during the reaction is at least 120 °C and even more preferably at least 125 °C, and wherein at least one catalyst is selected from the list consisting of imidazole, derivatives of imidazole and mixtures thereof, preferably imidazole.

It is preferred that all of the catalysts used in the inventive process for the continuous production of polyether alcohols are selected from the list consisting of imidazole, derivatives of imidazole and mixtures thereof.

In a prefererred embodiment of the inventive process, only one catalyst is used. In another embodiment of the inventive process, two or more catalysts are used, for example as a mixture of catalysts.

"Derivatives of imidazole" in the context of this invention in particular refers to N-alkylated imidazoles (substitution at 1-position), wherein the alkyl substituent is preferably selected from C1-to C10-compounds, more preferably from C1- to C5-compounds.

Particularly preferred alkyl substituents on the nitrogen atom of imidazole are ethyl and methyl, especially methyl.

Derivatives of imidazole also include imidazole moieties substituted with alkyl substituents on the 2- and/or 4- and/or 5-position, preferably on the 4- and/or 5-position, wherein the alkyl substituent(s) is/ are selected from C1- to C10-compounds, preferably from C1- to C5-compounds. Derivatives of imidazole futhermore include imidazole moieties substituted with alkyl substituents on one of the nitrogen atoms (1- position) and on the 2- and/or 4- and/or 5-position, preferably on the 4- and/or 5-position,wherein the alkyl substituent(s) is/ are selected from C1-to C10-compounds, preferably from C1- to C5-compounds.

Particularly preferred alkyl substituents are, also in these cases, ethyl and methyl, especially methyl.

"Derivatives of imidazole" may also include other kinds of substituents on the imidazole moiety, preferably on the nitrogen atom (1-position), for example aryl substituents.

In an especially prefererred embodiment, the imidazole moiety bears just one alkyl substituent on the nitrogen atom (1-position), wherein the alkyl substituent is ethyl or methyl, preferably methyl.

However, it is most preferred to use unsubstituted imidazole as catalyst.

In a particularly preferred embodiment of the inventive process for the continuous production of polyether alcohols, at least one catalyst is (unsubstituted) imidazole. In the most preferred embodiment of the inventive process for the continuous production of polyether alcohols, imidazole is used as the only catalyst.

The complete process is continuous from feeding the starters until stripping out PO and water. There is no starter dehydration as in KOH catalyzed process and there is no catalyst work-up or product stabilization at the end of the process.

The process usually contains 2 continuous stirred tank reactors (CSTRs) in series and followed by 1 plug flow reactor (PFR). Continuous stirred tank reactors are characterized by a broad residence time distribution (Ref: 1. Chemical reaction engineering, Octave Levenspiel, Wiley and Sons., 3rd Edition, 1999, pg: 266, 2. Perry's Chemical Engineers Handbook, Stanley Walas, McGraw Hill, 7th edition, 1998, section 23, pg: 23-18), meaning a broad range of polymerization degrees (Ref: Model Reactors and Their Design Equations, Vladimir Hlavacek1, Jan A. Puszynski2, Hendrik J. Viljoen3, Jorge E. Gatica4 Published Online: 15 JUN 2000 DOI: 10.1002/14356007.b04_121) in the reactor at steady state as compared to the plug flow reactor which is characterized by a narrow residence time distribution meaning different degree of polymerization at different points along the length of the reactor. The CSTRs offers better conversion of solid starters due to intensive mixing which is not possible in the plug flow reactors due to segregation of solid starters from rest of the polyol during the flow through reactors. One or more CSTRs are used to achieve more than 50% conversion of alkylene oxide fed to the process, preferably more than 70% conversion and most preferably more than 80% conversion of alkylene oxide.

Thus, the use of the at least one CSTR offers the advantage of being able to use all sorts of hydrogen-functional starter compounds in a continuous process, including starter compounds which are solid at room temperature.

Said temperature during the reaction is of the reaction mixture. So the temperature would, in one embodiment, be measured in those two CSTRS and at the entrance of the PFR. The temperature is measured with a temperature sensor in each of the reaction compartments.

Surprisingly it was found that catalysts selected from the group mentioned above and mixtures thereof allow continuous alkoxylation at higher reaction temperatures and thereby giving short residence times. The various advantages are listed below:
- Surprisingly it was found that the process catalyzed by the specific catalysts mentioned above works smoothly at temperatures above 115 °C.
- Using one of the specific catalysts mentioned above at high temperatures gives access to products with a molecular weight of > 600 g/mol, with much shorter residence times in the continuous process.
- In addition it was found that the process runs at very low catalyst concentration of 0.02-0.4 wt% using one of the specific catalysts mentioned above. The low catalyst concentration has little influence on the polyol reactivity in PU reaction, thus a further catalyst work-up step is obsolete.

The process as mentioned in WO 2007/147780 A1 could be carried out in a series of continuous reactor cascades consisting of stirred tank reactors and tubular reactors. The other reactor types which could be used for the reaction are the jet loop reactors, Buss reactors, compartment reactors, compartment reactors with one or more backmixed compartments, bubble column reactors, cascaded bubble column reactors, a loop reactor with static mixed elements, Baffled tubular reactor with oscillating flow, or a combination of above mentioned reactors in one or more hybrid reactor.

In the inventive process, at least one continuously stirred tank reactor (CSTR) is used.

In another preferred embodiment of the present invention, a series of continuously stirred tank reactors (CSTRs) or a combination of CSTRs with plug flow reactors (PFRs) are used, having multiple feed of raw materials or product outlets from reactor series.

In a preferred embodiment of the present invention, at least one of the hydrogen-functional starter compounds is solid at room temperature.

In a particularly preferred embodiment of the present invention, the solid hydrogen-functional starter compound is converted to a paste, wherein this paste is continuously added to the reactor vessel.

In a particularly preferred embodiment of the present invention, the paste is manufactured by mixing of the solid hydrogen-functional starter compound at room temperature with a compound liquid at room temperature or at elevated temperature.

In the context of the present invention, "paste" refers to mixtures of compounds solid at room temperature with compounds liquid at room temperature, each containing hydrogen atoms reactive with alkylene oxides. The compounds solid at room temperature are present in the form of particles with an average particle size of less than 2 mm. The mixtures are pumpable.

"Pumpable" means, in the context of the present invention, that the viscosity of the paste is at most 100 000 mPa.s, preferably 40 000 mPa.s, most preferably 15000 mPa s. A viscosity like this may be reached already at room temperature. If this is not the case, the viscosity may be adjusted by elevating the temperature; the determination of the viscosity is according to DIN 53019 (DIN = "Deutsche Industrienorm", German industry norm):
The solid starter could also be added to the process using a rotor stator dispersion machine or a dispersion pump which disperses the crystals or powdered starter in the liquid phase in the process (Liquid starter, reaction mixture in one of the reactors, intermediate product or end product or a combination of at least two of above mentioned liquids). The solid raw material could also be added to the reactor by passing it through a fast melting nozzles to melt the solid starter and feed it to the process in a very short time.

In a preferred embodiment of the present invention, the catalyst concentration is in the range of 0.02-0.4 mass% of the throughput of the continuous process.

The catalyst is preferably added as a solid in the reactor or in the paste, or fed directly to the process as a melt or dissolved in water or any other solvent, or as a mixture with other liquid. In a preferred embodiment, the catalyst is added as a solution in water, preferably as a 20 % to 90 % by weight solution in water, more preferably as a 50 % to 70 % by weight solution in water.

In a preferred embodiment of the present invention, polyether alcohols with an OH number <1000 mg KOH/ g, more preferably <500 mg KOH/g are produced. The OH number is determined according to DIN EN 1240:2010 (DIN = "Deutsche Industrienorm", Germany industry standard).

In a preferred embodiment of the present invention, at least one alkylene oxide is selected from the group consisting of ethylene oxide, propylene oxide, butylene oxide. More preferably, all of the alkylene oxides used in the inventive process are selected from the group consisting of ethylene oxide (EO), propylene oxide (PO), butylene oxide (BO); very preferably, propylene oxide is one of the used alkylene oxides.

In a particularly preferred embodiment of the present invention, one alkylene oxide is used, wherein this alkylene oxide is propylene oxide.

The PO may have been produced using the HPPO process (hydrogen peroxide based propylene oxide) or the styrene monomer-PO (SMPO) process or the chlorohydrin process.

In a preferred embodiment of the present invention, at least one hydrogen-functional starter compound is selected from the group consisting of NH- and OH-functional compounds, and mixtures thereof. More preferably, all of the hydrogen-functional starter compounds are selected from the group consisting of NH- and OH-functional compounds, and mixtures thereof.

In another preferred embodiment of the present invention, at least one hydrogen-functional starter compound is selected from the group consisting of NH-functional compounds, and mixtures thereof. More preferably, all of the hydrogen-functional starter compounds are selected from the group consisting of NH-functional compounds, and mixtures thereof.

In another preferred embodiment of the present invention, at least one hydrogen-functional starter compound is selected from the group consisting of OH-functional compounds, and mixtures thereof. More preferably, all of the hydrogen-functional starter compounds are selected from the group consisting of OH-functional compounds, and mixtures thereof.

In a preferred embodiment, the OH-functional compounds may be selected from the group consisting of carbohydrates.

In another preferred embodiment of the inventive process, the OH-functional compounds may be selected from the group consisting of pentaerythrite, sorbit, saccharose, cellulose, starch, hydrolysates of starch, water, glycerine, ethylene glycol (EG), diethylene glycol (DEG), propylene glycol (PG), dipropylene glycol (DPG), butanediol, polyetherols, and mixtures thereof. Preferably, the NH-functional compounds compounds may be selected from the group consisting of aliphatic amines, aromatic amines, aminoalcohols, and mixtures thereof.

Particularly preferred are NH-functional compounds selected from the group consisting of ethane-1,2-diamine (EDA), ethanol amine, diethanol amine, amino phenols, amino toluene, toluene diamine (TDA), aniline, 4,4'-methylene dianiline (MDA), polymeric 4,4'-methylene dianiline (PMDA), urea and its derivatives, melamine, phenylcyclohexylamine, and mixtures thereof. In case of TDA, the vicinal isomers are preferred.

In a preferred embodiment of the inventive process, at least one hydrogen-functional starter compound is selected from the group containing compounds with a functionality of more than 3.5, more preferably in the range of 4 to 6.5.

In a preferred embodiment of the present invention, at least one hydrogen-functional starter compound, and more preferred all of the hydrogen-functional starters, is/ are selected from the group consisting of crystal sugar, powdered sugar, a slurry of sugar in other liquid starters and a sugar syrup.

In an especially preferred embodiment of the inventive process for the continuous production of polyether alcohols, the catalyst is imidazole, and the alkylene oxide is propylene oxide, and the hydrogen-functional starter compound is selected from the group consisting of NH- and OH-functional compounds, and mixtures thereof, most preferably from sugar and/or water, glycerine, ethylene glycol (EG), diethylene glycol (DEG), propylene glycol (PG), dipropylene glycol (DPG), butanediol, TDA..

Besides, there were more improvements in the process described in WO2009/077517A1, other than the use of specific catalysts.

For example, any air pockets in the sugar dosing line leads to sugar deposition / crystallization on the inner surface of the pipe thus eventually blocking the sugar dosing line. This could preferentially be avoided by using a buffer vessel to separate entrained gas from the sugar-glycerine paste before it is pumped to the reactor. The degassed paste has a smooth flow through the dosing line, thus reducing pressure peaks in the pump which reduced the wear and tear of the pump.

Furthermore, when the sugar-glycerine paste was added to the reactor by a dip tube or in the external loop, it was difficult to disperse the sugar paste in the reactor due to the viscosity difference. In order to overcome this problem, a dispersion equipment such as a rotor-stator, high shear mixer / CSTR, static mixer could preferentially be installed in the external loop of the reactor. The higher energy dissipation of this dispersion equipment ensured homogeneous dispersion of sugar-glycerine paste in the polyetherol in the reactor reducing the residual sugar in the final product.

Herein described is also a polyether alcohol, obtainable by the inventive process for the continuous production of polyether alcohols by catalyzed addition of at least one alkylene oxide to at least one hydrogen-functional starter compound.

Also herein described is the use of a polyether alcohol, obtainable by the inventive process, for the manufacture of polyurethanes.

Also herein described is a process for the manufacture of polyurethanes, by reacting at least one polyisocyanate or diisocyanate with at least one polyether alcohol, obtainable by the inventive process.

In a preferred embodiment, the polyurethane is a rigid foam polyurethane.

In a preferred embodiment, the rigid foam polyurethane obtainable by the inventive process for the continuous production of polyether alcohols is used in the field of automotive, construction or appliance systems.

In the preferred embodiment of the present invention, the start-up, shut-down, re-start of the process in case of intermediate stoppage or product change in the process consisting of two or more reactors is done as it would be usually done for a continuous process by a skilled person.

The start-up of the continuous process could be carried out in two ways:
1) All reactors are filled with the product that needs to be produced in the process and the reactors are tempered to the reaction temperature and the feed of H-functional starter, catalyst and alkylene oxide are started to the first reactor at 100% of required feed rate. Instead of the final product the reactors could also be filled with an intermediate product if available, which is having lower molecular weight than the targeted final product. At the start-up of the process some catalyst could be pre-charged to the first reactor and/or to other reactors in the process. The amount of catalyst could vary from about 50%-500% of the amount required in the end product, preferably 80%-400% and most preferably between 100% - 300%. It is also possible to reduce the AO, catalyst and starter feed at lower feed rates and reach the 100% of required feed rate in a short time of maximum 6 hours after continuous start of at least one feed to the process. Instead of pre-charging the catalyst to the reactors, the catalyst could be continuously added to the first reactor at a higher dosing rate than 100% for the maximum time of 6 hrs, while adding starter and AO at 100% feed rate. The catalyst feed rate is then reduced to the 100% feed rate required in the recipe of the targeted product.
2) Only the first reactor is filled with the product that needs to be produced. All reactors are tempered to the reaction temperature and the feed of H-functional starter, catalyst and alkylene oxide are started to the first reactor at 100% of required feed rate. After the continuous feed is started to the process, the product from the first reactor is continuously transferred to the second reactor to fill it up to the required filling level. Once the second reactor is filled the product is transferred to the next reactor in the process and thus all reactors are filled up to get the final product out of the last reactor of the process. Thus each reactor is fed with the product when the subsequent reactor is filled to the required filling level. Instead of the end product the first reactor could also be filled with an intermediate product which is having lower molecular weight than the targeted final product. At the start of the process some catalyst could be pre-charged to the first reactor and/or to other reactors in the process. The amount of catalyst could vary from about 50%-500% of the amount required in the end product, preferably 80%-400% and most preferably between 100% - 300%. It is also possible to reduce the AO, catalyst and starter feed at lower feed rates and reach the 100% of required feed rate in a short time of maximum 6 hours after continuous start of at least one feed to the process. Instead of pre-charging the catalyst to the reactors, the catalyst could be continuously added to the first reactor at a higher dosing rate than 100% for the maximum time of 6 hrs, while adding starter and AO at 100% feed rate. The catalyst feed rate is then reduced to the 100% feed rate required in the recipe of the targeted product.

In case of shut down, all feed to the process are stopped instantaneously or one after other within a short span of maximum 6 hrs after first feed is stopped. The product is continuously collected from the last reactor of the process. The first reactor is emptied with the constant flow rate to the second reactor. The second reactor is emptied to the next one and eventually the last reactor is emptied out. Once all reactors are emptied the reactors are cooled down if no immediate start-up of the plant is planned in the next 96 hrs.

In case of a disturbance in the process, all feeds are stopped and the reactors are not emptied as described above for shut-down of the plant. The temperatures of all reactors are maintained constant to the reaction temperature. If the plant has to be re-started in less than 6 hrs after all the feeds were stopped, then all feeds to the process are started at the same time and set to 100% of the required feed rate and the product is collected from the last reactor of the process. If the plant is re-started more than 6 hrs after the feeds were stopped then it is preferable to charge additional catalyst to the first and/or other reactors before the continuous feed of starter, catalyst and AO is started to the process.

The continuous plant as describe above could be used to produce a single product or more than one product. In case of more than one product the plant has to be switched from one product to another product. The product switching could be done in three different ways as follows:
1) Switching from one product to a second one could either be done on the fly i.e. directly changing the feed rates of the starter, catalyst and AO to the required feed rates of the second product that needs to be produced. During this product switching procedure, the product which is off-spec from the first product and the second product should be collected separately as off-spec product.
2) The other way to switch the products would be to shut-down the plant using one of the above mentioned shut-down procedures and remove the first product completely from the plant. Intermediate washing of the plant could be done if no cross contamination between the two products is tolerated. The plant could then be started up again for the second product using the above mentioned procedures for the start-up of the plant. In this case very less amount of off-spec product is produced.
3) Another way to switch the products would be to shut down the feeds to the process. Empty the first reactor continuously to the second reactor while collecting the first product from the process. Empty the second reactor to the next one and continue so on until the last reactor is emptied with a constant flow rate equal to the production rate of the process. As soon as the first reactor is empty, fill the first reactor with the second product that needs to be produced. As soon as the second reactor is emptied and is free of the first product, start all feeds to the first reactor with required feed rates for the second product and continuously transfer the product to the second reactor until it is filled. Similarly fill up the following reactors until all reactors are filled with the second product and the second product is collected continuously at the end of the process. This way all the reactors are sequentially emptied of the first product and filled with the second product with minimum production loss between the product switching.

### Examples

In the following, some examples are given in order to illustrate some aspects of the present invention. However, these examples are in no way meant to limit the scope of the present invention.

### Example 1:

A mixture of sucrose and glycerin (ratio 77/23) was produced in an extruder and pumped in the external circulation loop of a continuously stirred tank reactor (CSTR) (2.8 liter) using a piston pump.

Dimethylethanol amine (DMEOA) (0.75 wt% of total feed to the CSTR) and propylene oxide was continuously added to the CSTR using HPLC pumps. The total mass flow was about 918 g/h. The reaction mixture was continuously drawn from the CSTR with the same mass flow (918 g/h) as the feed to the CSTR and fed to a tubular reactor (volume 1.1 liter) in order to achieve high conversion of PO. The unconverted propylene oxide was continuously removed in a stripping vessel under vacuum (50 mbar). The reaction temperature was 120 °C in the CSTR as well as in the tubular reactor. The product was not worked-up. The reaction product that was obtained during the steady state operation (after 5 residence times) was analyzed. In CSTR the propylene oxide concentration was about 7 wt% measured using an ATR-IR spectrophotometer. The OH number of the product was 475 mg KOH/g and the viscosity was about 25202 mPa s. No residual sugar could be detected in the product.

Compared to this, when the experiment was carried out at 110 °C in the CSTR and /or in the tubular reactor, the free Propylene oxide concentration in the reactor was about 5 wt%. The OH number was 450 mg KOH/g and the viscosity of the product was about 22500 mPa s, which were the required properties of the polyetherol.

Comparison experiments were done with imidazole catalyst (50% wt solution in water, 0.3 wt% of total feed to CSTR) at 110 °C, 120 °C and 130 °C in the reactor described above with a total mass flow of 918 g/h. The product analytics is summarized in the table below.

| Experiments | Catalyst | Reaction temperature °C | Free propylene oxide concentration wt% | OH number mg KOH/g | Viscosity @ 25°C mPa s |
|---|---|---|---|---|---|
| 1 | DMEOA | 120 | 7 | 475 | 25202 |
| 2 | Imidazole | 110 | 8 | 451 | 18256 |
| 3 | Imidazole | 120 | 5.5 | 452 | 17860 |
| 4 | Imidazole | 130 | 4 | 448 | 18170 |

It can be seen from the experimental results that the use of an imidazole catalyst at higher temperatures leads to higher activities; besides, an OH number and a viscosity within the desired specifications could be obtained in the product manufactured according to the inventive process.

### Example 2:

A mixture of Sucrose and Glycerin (Ratio 67/33) was produced in an shear force mixer and pumped in the external circulation loop of a continuously stirred tank reactor (CSTR) (600 liter) using a positive displacement pump.

Dimethlyethanolamine (0.75 wt% of total feed to the CSTR) and propylene oxide was continuously added to the CSTR using membrane pumps (Lewa pumps). The total mass flow was about 55 kg/h. Part of this mixture was continuously fed to a tubular reactor (volume 200 liter) in order to achieve high conversion of PO. The unconverted propylene oxide was continuously removed in a stripping vessel under vacuum (50 mbar). The reaction temperature was 110 °C in the CSTR as well as in the tubular reactor. The product was not worked-up. The reaction product that was obtained during the steady state operation (after 5 residence times) was analyzed. Another experiment was carried out with 50% solution of imidazole in water (0.3 % of the total feed) with the same recipe as described above but with slightly higher temperatures as given below. The product from this experiment was analyzed and the results are shown in the table below.

| Experiment | Catalyst | Reaction temperature °C | Catalyst concentration, wt% | OH number mg KOH/g | Free PO concentration wt% | Viscosity @ 25°C mPa s |
|---|---|---|---|---|---|---|
| 5 | DMEOA | 110 | 0.75 | 398 | 11.5 | 6814 |
| 6 | Imidazole | 130 | 0.15 | 358 | 6 | 3722 |

The examples show that the necessary catalyst concentration is lower when using imidazole as catalyst, compared to the use of DMEOA catalyst.

## Claims

1. A process for the continuous production of polyether alcohols by catalyzed addition of at least one alkylene oxide to at least one hydrogen-functional starter compound, wherein the temperature during the reaction is at least 120 °C, and wherein at least one catalyst is selected from the list consisting of imidazole, derivatives of imidazole and mixtures thereof, wherein at least one continuously stirred tank reactor (CSTR) is used, and wherein "derivatives of imidazole" refers to (i) N-alkylated imidazoles, (ii) imidazole moieties substituted with alkyl substituents on the 2- and/or 4- and/or 5-position, wherein the alkyl substituent(s) is/ are selected from C1- to C10-compounds, (iii) imidazole moieties substituted with alkyl substituents on one of the nitrogen atoms (1- position) and on the 2- and/or 4- and/ or 5-position, wherein the alkyl substituent(s) is/ are selected from C1-to C10-compounds.

2. A process for the continuous production of polyether alcohols according to claim 1, wherein all of the used catalysts are selected from the list given in claim 1.

3. A process for the continuous production of polyether alcohols according to claim 1 or 2, wherein at least one catalyst is selected from the group containing derivatives of imidazole.

4. A process for the continuous production of polyether alcohols according to claim 3, wherein the group containing derivatives of imidazole consists of N-alkylated imidazoles.

5. A process for the continuous production of polyether alcohols according to any of the preceding claims, wherein at least one catalyst is imidazole.

6. A process for the continuous production of polyether alcohols according to claim 5, wherein one catalyst is used, wherein this catalyst is imidazole.

7. A process for the continuous production of polyether alcohols according to any of the preceding claims, wherein at least one of the hydrogen-functional starter compounds is solid at room temperature.

8. Process for the continuous production of polyether alcohols according to any of the preceding claims, wherein the catalyst concentration is in the range of 0,02-0,4% mass of the throughput of the continuous process.

9. Process according to any of the preceding claims, wherein the catalyst is fed as a solid or paste or as a liquid feed as a melt, or dissolved in a solvent or water or mixed with other liquid feed in the reactor.

10. Process for the continuous production of polyether alcohols according to any of the preceding claims, wherein polyether alcohols with a OH number < 1000 mg KOH/g are produced.

11. Process for the continuous production of polyether alcohols according to any of the preceding claims, wherein the solid hydrogen-functional starter compound is converted to a paste, and wherein this paste is continuously added to the reactor vessel.

12. Process for the continuous production of polyether alcohols according to any of the preceding claims, wherein the paste is manufactured by mixing of the solid hydrogen-functional starter compound at room temperature with a compound liquid at room temperature or at elevated temperature.

13. Process for the continuous production of polyether alcohols according to any of the preceding claims, wherein a series of continuously stirred tank reactors (CSTRs) or a combination of CSTRs with plug flow reactors (PFRs) are used, having multiple feed of raw materials or product outlets from reactor series.

14. Process for the continuous production of polyether alcohols according to any of the preceding claims, wherein at least one alkylene oxide is selected from the group consisting of ethylene oxide, propylene oxide, butylene oxide.

15. Process for the continuous production of polyether alcohols according to any of the preceding claims, wherein one alkylene oxide is used, and wherein this alkylene oxide is propylene oxide.

16. Process for the continuous production of polyether alcohols according to any of the preceding claims, wherein at least one hydrogen-functional starter compound is selected from the group consisting of NH- and OH-functional compounds, and mixtures thereof.

17. Process for the continuous production of polyether alcohols according to any of the preceding claims, wherein at least one hydrogen-functional starter compound is selected from the group consisting of NH-functional compounds, and mixtures thereof.

18. Process for the continuous production of polyether alcohols according to any of claims 1 to 16, wherein at least one hydrogen-functional starter compound is selected from the group consisting of OH-functional compounds, and mixtures thereof.

19. Process for the continuous production of polyether alcohols according to claim 16 or 18, wherein the OH-functional compounds are selected from the group consisting of pentaerythrite, sorbit, saccharose, cellulose, starch, hydrolysates of starch, water, glycerine, ethylene glycol (EG), diethylene glycol (DEG), propylene glycol (PG), dipropylene glycol (DPG), butanediol, polyetherols, and mixtures thereof.

20. Process for the continuous production of polyether alcohols according to claim 16 or 17, wherein the NH-functional compounds are selected from the group consisting of aliphatic amines, aromatic amines, aminoalcohols, and mixtures thereof.

21. Process for the continuous production of polyether alcohols according to claim 16 or 17, wherein the NH- functional compounds are selected from the group consisting of ethane-1,2-diamine (EDA), ethanol amine, diethanol amine, amino phenols, amino toluene, toluene diamine (TDA), aniline, 4,4'-methylene dianiline (MDA), polymeric 4,4'-methylene dianiline (PMDA), melamine, phenylcyclohexylamine.

22. Process for the continuous production of polyether alcohols according to any of claims 1 to 18 or claim 20, wherein at least one hydrogen-functional starter compound is selected from the group containing compounds with an average functionality of more than 3,5.

## Patentansprüche

1. Verfahren zur kontinuierlichen Herstellung von Polyetheralkoholen durch katalysierte Addition mindestens eines Alkylenoxids an mindestens eine wasserstofffunktionelle Starterverbindung, wobei die Temperatur während der Reaktion mindestens 120°C beträgt, und wobei mindestens ein Katalysator aus der Liste bestehend aus Imidazol, Imidazolderivaten und Mischungen davon ausgewählt wird, wobei mindestens ein kontinuierlicher Rührkessel (Continuously Stirred Tank Reactor, CSTR) verwendet wird, und wobei sich "Imidazolderivate" auf (i) N-alkylierte Imidazole, (ii) Imidazolgruppierungen, die an der 2- und/oder 4- und/oder 5-Position durch Alkylsubstituenten substituiert sind, wobei der Alkylsubstituent bzw. die Alkylsubstituenten aus C1- bis C10-Verbindungen ausgewählt ist bzw. sind, (iii) Imidazolgruppierungen, die an einem der Stickstoffatome (1-Position) und an der 2- und/oder 4- und/oder 5-Position durch Alkylsubstituenten substituiert sind, wobei der Alkylsubstituent bzw. die Alkylsubstituenten aus C1- bis C10-Verbindungen ausgewählt ist bzw. sind, bezieht.

2. Verfahren zur kontinuierlichen Herstellung von Polyetheralkoholen nach Anspruch 1, wobei alle der verwendeten Katalysatoren aus der in Anspruch 1 angegebenen Liste ausgewählt werden.

3. Verfahren zur kontinuierlichen Herstellung von Polyetheralkoholen nach Anspruch 1 oder 2, wobei mindestens ein Katalysator aus der Gruppe enthaltend Imidazolderivate ausgewählt wird.

4. Verfahren zur kontinuierlichen Herstellung von Polyetheralkoholen nach Anspruch 3, wobei die Gruppe enthaltend Imidazolderivate aus N-alkylierten Imidazolen besteht.

5. Verfahren zur kontinuierlichen Herstellung von Polyetheralkoholen nach einem der vorhergehenden Ansprüche, wobei es sich bei mindestens einem Katalysator um Imidazol handelt.

6. Verfahren zur kontinuierlichen Herstellung von Polyetheralkoholen nach Anspruch 5, wobei ein einziger Katalysator verwendet wird, wobei es sich bei diesem Katalysator um Imidazol handelt.

7. Verfahren zur kontinuierlichen Herstellung von Polyetheralkoholen nach einem der vorhergehenden Ansprüche, wobei mindestens eine der wasserstofffunktionellen Starterverbindungen bei Raumtemperatur fest ist.

8. Verfahren zur kontinuierlichen Herstellung von Polyetheralkoholen nach einem der vorhergehenden Ansprüche, wobei die Katalysatorkonzentration im Bereich von 0,02 bis 0,4 Massen-% des Durchsatzes des kontinuierlichen Verfahrens liegt.

9. Verfahren nach einem der vorhergehenden Ansprüche, wobei der Katalysator in Form eines Feststoffs oder einer Paste oder in Form eines flüssigen Einsatzstoffs in Form einer Schmelze oder in einem Lösungsmittel oder Wasser gelöst oder mit einem anderen flüssigen Einsatzstoff gemischt in den Reaktor eingespeist wird.

10. Verfahren zur kontinuierlichen Herstellung von Polyetheralkoholen nach einem der vorhergehenden Ansprüche, wobei Polyetheralkohole mit einer OH-Zahl < 1000 mg KOH/g hergestellt werden.

11. Verfahren zur kontinuierlichen Herstellung von Polyetheralkoholen nach einem der vorhergehenden Ansprüche, wobei die feste wasserstofffunktionelle Starterverbindung in eine Paste umgewandelt wird und diese Paste kontinuierlich in den Reaktorbehälter gegeben wird.

12. Verfahren zur kontinuierlichen Herstellung von Polyetheralkoholen nach einem der vorhergehenden Ansprüche, wobei die Paste durch Mischen der festen wasserstofffunktionellen Starterverbindung bei Raumtemperatur mit einer bei Raumtemperatur flüssigen Verbindung oder bei erhöhter Temperatur hergestellt wird.

13. Verfahren zur kontinuierlichen Herstellung von Polyetheralkoholen nach einem der vorhergehenden Ansprüche, wobei eine Reihe von kontinuierlichen Rührkesseln (CSTRs) oder eine Kombination von CSTRs mit Pfropfenströmungsreaktoren (Plug Flow Reactors, PFRs) mit mehrfacher Zuführung von Ausgangsstoffen oder Produktauslässen aus der Reaktorreihe verwendet werden.

14. Verfahren zur kontinuierlichen Herstellung von Polyetheralkoholen nach einem der vorhergehenden Ansprüche, wobei das mindestens eine Alkylenoxid aus der Gruppe bestehend aus Ethylenoxid, Propylenoxid, Butylenoxid ausgewählt wird.

15. Verfahren zur kontinuierlichen Herstellung von Polyetheralkoholen nach einem der vorhergehenden Ansprüche, wobei ein einziges Alkylenoxid verwendet wird und wobei es sich bei diesem Alkylenoxid um Propylenoxid handelt.

16. Verfahren zur kontinuierlichen Herstellung von Polyetheralkoholen nach einem der vorhergehenden Ansprüche, wobei mindestens eine wasserstofffunktionelle Starterverbindung aus der Gruppe bestehend aus NH- und OH-funktionellen Verbindungen und Mischungen davon ausgewählt wird.

17. Verfahren zur kontinuierlichen Herstellung von Polyetheralkoholen nach einem der vorhergehenden Ansprüche, wobei mindestens eine wasserstofffunktionelle Starterverbindung aus der Gruppe bestehend aus NH-funktionellen Verbindungen und Mischungen davon ausgewählt wird.

18. Verfahren zur kontinuierlichen Herstellung von Polyetheralkoholen nach einem der Ansprüche 1 bis 16, wobei mindestens eine wasserstofffunktionelle Starterverbindung aus der Gruppe bestehend aus OH-funktionellen Verbindungen und Mischungen davon ausgewählt wird.

19. Verfahren zur kontinuierlichen Herstellung von Polyetheralkoholen nach Anspruch 16 oder 18, wobei die OH-funktionellen Verbindungen aus der Gruppe bestehend aus Pentaerythrit, Sorbit, Saccharose, Cellulose, Stärke, Stärkehydrolysaten, Wasser, Glycerin, Ethylenglykol (EG), Diethylenglykol (DEG), Propylenglykol (PG), Dipropylenglykol (DPG), Butandiol, Polyetherolen und Mischungen davon ausgewählt werden.

20. Verfahren zur kontinuierlichen Herstellung von Polyetheralkoholen nach Anspruch 16 oder 17, wobei die NH-funktionellen Verbindungen aus der Gruppe bestehend aus aliphatischen Aminen, aromatischen Aminen, Aminoalkoholen und Mischungen davon ausgewählt werden.

21. Verfahren zur kontinuierlichen Herstellung von Polyetheralkoholen nach Anspruch 16 oder 17, wobei die NH-funktionellen Verbindungen aus der Gruppe bestehend aus Ethan-1,2-diamin (EDA), Ethanolamin, Diethanolamin, Aminophenolen, Aminotoluol, Toluoldiamin (TDA), Anilin, 4,4'-Methylendianilin (MDA), polymerem 4,4'-Methylendianilin (PMDA), Melamin, Phenylcyclohexylamin ausgewählt werden.

22. Verfahren zur kontinuierlichen Herstellung von Polyetheralkoholen nach einem der Ansprüche 1 bis 18 oder Anspruch 20, wobei mindestens eine wasserstofffunktionelle Starterverbindung aus der Gruppe enthaltend Verbindungen mit einer durchschnittlichen Funktionalität von mehr als 3,5 ausgewählt wird.

## Revendications

1. Procédé de production continue de polyétheralcools par addition catalysée d'au moins un oxyde d'alkylène à au moins un composé de départ à fonctionnalité hydrogène, dans lequel la température pendant la réaction est d'au moins 120 °C, dans lequel au moins un catalyseur est choisi dans la liste constituée par l'imidazole, les dérivés d'imidazole et les mélanges de ceux-ci, dans lequel au moins un réacteur à cuve agitée en continu (CSTR) est utilisé, et dans lequel les « dérivés d'imidazole » font référence à (i) les imidazoles N-alkylés, (ii) les fractions imidazole substituées par des substituants alkyle sur la position 2 et/ou 4 et/ou 5, le(s) substituant(s) alkyle étant choisi (s) parmi les composés en C₁ à C₁₀, (iii) les fractions imidazole substituées par des substituants alkyle sur un des atomes d'azote (position 1) et sur la position 2 et/ou 4 et/ou 5, le(s) substituant(s) alkyle étant choisi(s) parmi les composés en C₁ à C₁₀.

2. Procédé de production continue de polyétheralcools selon la revendication 1, dans lequel tous les catalyseurs utilisés sont choisis dans la liste donnée dans la revendication 1.

3. Procédé de production continue de polyétheralcools selon la revendication 1 ou 2, dans lequel au moins un catalyseur est choisi dans le groupe contenant les dérivés d'imidazole.

4. Procédé de production continue de polyétheralcools selon la revendication 3, dans lequel le groupe contenant les dérivés d'imidazole est constitué par les imidazoles N-alkylés.

5. Procédé de production continue de polyétheralcools selon l'une quelconque des revendications précédentes, dans lequel au moins un catalyseur est l'imidazole.

6. Procédé de production continue de polyétheralcools selon la revendication 5, dans lequel un catalyseur est utilisé, ce catalyseur étant l'imidazole.

7. Procédé de production continue de polyétheralcools selon l'une quelconque des revendications précédentes, dans lequel au moins un des composés de départ à fonctionnalité hydrogène est solide à température ambiante.

8. Procédé de production continue de polyétheralcools selon l'une quelconque des revendications précédentes, dans lequel la concentration de catalyseur se situe dans la gamme de 0,02-0,4 % en masse du débit du procédé continu.

9. Procédé selon l'une quelconque des revendications précédentes, dans lequel le catalyseur est introduit sous la forme d'un solide ou d'une pâte ou sous la forme d'une charge liquide comme une masse fondue, ou dissous dans un solvant ou de l'eau ou mélangé avec une autre charge liquide dans le réacteur.

10. Procédé de production continue de polyétheralcools selon l'une quelconque des revendications précédentes, dans lequel des polyétheralcools avec un indice d'OH < 1000 mg KOH/g sont produits.

11. Procédé de production continue de polyétheralcools selon l'une quelconque des revendications précédentes, dans lequel le composé de départ à fonctionnalité hydrogène solide est transformé en une pâte, et dans lequel cette pâte est ajoutée en continu à la cuve du réacteur.

12. Procédé de production continue de polyétheralcools selon l'une quelconque des revendications précédentes, dans lequel la pâte est fabriquée par mélange du composé de départ à fonctionnalité hydrogène solide à température ambiante avec un composé liquide à température ambiante ou à température élevée.

13. Procédé de production continue de polyétheralcools selon l'une quelconque des revendications précédentes, dans lequel une série de réacteurs à cuve agitée en continu (CSTR) ou une combinaison de CSTR avec des réacteurs à écoulement piston (PFR) est utilisée, ayant de multiples alimentations en matières premières ou sorties de produits de la série de réacteurs.

14. Procédé de production continue de polyétheralcools selon l'une quelconque des revendications précédentes, dans lequel au moins un oxyde d'alkylène est choisi dans le groupe constitué par l'oxyde d'éthylène, l'oxyde de propylène, et l'oxyde de butylène.

15. Procédé de production continue de polyétheralcools selon l'une quelconque des revendications précédentes, dans lequel un oxyde d'alkylène est utilisé, et dans lequel cet oxyde d'alkylène est l'oxyde de propylène.

16. Procédé de production continue de polyétheralcools selon l'une quelconque des revendications précédentes, dans lequel au moins un composé de départ à fonctionnalité hydrogène est choisi dans le groupe constitué par les composés à fonctionnalité NH et OH, et les mélanges de ceux-ci.

17. Procédé de production continue de polyétheralcools selon l'une quelconque des revendications précédentes, dans lequel au moins un composé de départ à fonctionnalité hydrogène est choisi dans le groupe constitué par les composés à fonctionnalité NH, et les mélanges de ceux-ci.

18. Procédé de production continue de polyétheralcools selon l'une quelconque des revendications 1 à 16, dans lequel au moins un composé de départ à fonctionnalité hydrogène est choisi dans le groupe constitué par les composés à fonctionnalité OH, et les mélanges de ceux-ci.

19. Procédé de production continue de polyétheralcools selon la revendication 16 ou 18, dans lequel les composés à fonctionnalité OH sont choisis dans le groupe constitué par la pentaérythrite, la sorbite, le saccharose, la cellulose, l'amidon, les hydrolysats d'amidon, l'eau, la glycérine, l'éthylène glycol (EG), le diéthylène glycol (DEG), le propylène glycol (PG), le dipropylène glycol (DPG), le butanediol, les polyétherols, et les mélanges de ceux-ci.

20. Procédé de production continue de polyétheralcools selon la revendication 16 ou 17, dans lequel les composés à fonctionnalité NH sont choisis dans le groupe constitué par les amines aliphatiques, les amines aromatiques, les aminoalcools, et les mélanges de ceux-ci.

21. Procédé de production continue de polyétheralcools selon la revendication 16 ou 17, dans lequel les composés à fonctionnalité NH sont choisis dans le groupe constitué par l'éthane-1,2-diamine (EDA), l'éthanolamine, la diéthanolamine, les aminophénols, l'aminotoluène, la toluènediamine (TDA), l'aniline, la 4,4'-méthylènedianiline (MDA), la 4,4'-méthylènedianiline polymère (PMDA), la mélamine, et la phénylcyclohexylamine.

22. Procédé de production continue de polyétheralcools selon l'une quelconque des revendications 1 à 18 ou la revendication 20, dans lequel au moins un composé de départ à fonctionnalité hydrogène est choisi dans le groupe contenant les composés avec une fonctionnalité moyenne supérieure à 3,5.
